# EUROPÄISCHE PATENTANMELDUNG

(11) **EP 0 597 472 A1**
(43) Veröffentlichungstag der Anmeldung: **18.05.1994**
(21) Anmeldenummer: 93118281.0
(22) Anmeldetag: 11.11.1993
(51) Int. Cl.: G02F 1/35

(54) **Optischer Schalter**

(30) Priorität: 12.11.1992 DE 4238103
(71) Anmelder: Alcatel SEL Aktiengesellschaft, D-70435 Stuttgart (DE)
(72) Erfinder: Bülow, Henning, Dr., D-71638 Ludwigsburg (DE)
(74) Vertreter: Schätzle, Albin, Dipl.-Phys.

(57) **Zusammenfassung**

Für sogenannte Add-Drop-Multiplexer werden schnelle optische Schalter (SCH) gebraucht, die optische, aus unterschiedlichen Signalquellen stammende Signalwellen schalten können.

Bekannte optische Schalter weisen ein Interferometer auf, in dem die Signalwelle in zwei Teilsignale aufgeteilt und eines mit einem optischen Schaltpuls überlagert wird. Bedingt durch den Kerreffekt lassen sich Interferenzsignale erzeugen, die in einem optischen Koppler steuerbar auf einen vorgegebenen Ausgang geschaltet werden können. Teilsignale und Schaltpuls weisen dabei gleiche Polarisationsrichtung auf, was bei Signalen aus unterschiedlichen Signalquellen zu Schaltproblemen führen kann.

Der Kernpunkt der Erfindung liegt daher in der Verwendung von Schaltpulsen, die aus quasi-depolarisiertem Licht bestehen. Solche Schaltpulse werden vorteilhafterweise in Schaltpulsquellen (SQ) erzeugt, in denen zwei plorisierte Lichtstrahlen orthogonal überlagert werden. Der Schaltpuls nimmt in einem optischen Lichtwellenleiter (LWL, , SP) mit nicht linearem Brechungsindex einen sich stets ändernden Polarisationszustand an.

## Beschreibung

Die Erfindung betrifft einen optischen Schalter gemäß dem Oberbegriff des Anspruchs 1.

Solche optische Schalter sind für das schnelle optische Schalten von optischen Signalen, wie z.B. in sogenannten Add-Drop-Multiplexern, vorgesehen. Diese Add-Drop-Multiplexer sind Bestandteile von digitalen Übertragungssystemen, die nach der synchronen digitalen Hirarchie (SDH) arbeiten und in denen dem in einem Rahmen strukturierten Zeitmultiplexsignal zusätzliche Signale eingefügt oder abgezweigt werden.

Aus der Zeitschrift "Electronics Letters" 17. März 1988, Band 24, Nr. 6, Seiten 340 f ist ein solcher Schalter bekannt, der ein Mach-Zehnder-Interferometer mit zwei Interferometerarmen aufweist, bei dem ein optisches Signal in einem ersten Koppler in beide Interferometerarme gekoppelt und anschließend in einem zweiten Koppler wieder zusammengeführt wird. Dabei kann in einem der beiden Interferometerarme ein optischer Schaltpuls zugeführt werden, so daß es aufgrund des Kerreffekts zu einer gesteuerten Änderung der optischen Länge dieses Interferometerarmes für Licht einer bestimmten Polarisationsrichtung kommt. Aufgrund dieser Änderung entsteht eine Phasenverschiebung der beiden Teilsignale. Durch eine gesteuerte Phasenverschiebung beeinflußte Interferenz wird die optische Signalwelle im zweiten Koppler geschaltet

Aus der Zeitschrift "Electronics Letters" vom 25. April 1991, Band 27, Nr. 9, Seiten 704 f ist ebenfalls ein optischer Schalter bekannt, der als Interferometer ausgebildet ist und bei dem eine optische Signalwelle durch einen optischen Schaltpuls geschaltet werden kann. Als Interferometer wurde ein sogenanntes Sagnac-Interferometer verwendet.

Bei den beiden bekannten Typen von optischen Schaltern wird eine polarisierte optische Signalwelle geschaltet. Um eine definierte Wechselwirkung zwischen der optischen Signalwelle und dem optischen Schaltpuls zu erhalten, sind in den bekannten Interferometern Polarisationssteller angeordnet, die bei längerem Betrieb aufgrund von Temperaturschwankungen und anderen Einschlüssen stets nachgeregelt werden müssen.

Ferner stammen die Signal wellen häufig von unterschiedlichen Signalquellen und weisen unterschiedliche Polarisationsrichtungen auf. Auch in diesem Fall ist ein stetiges Regeln der Polarisationsstellen notwendig, um ein optimales Schalten zu ermöglichen.

Der Erfindung liegt nun die Aufgabe zugrunde, einen optischen Schalter zu schaffen, der mit einfachen Mitteln auch über längere Zeiträume ein betriebssicheres definierbares Schalten ermöglicht.

Die Aufgabe wird durch die Lehre des Anspruchs 1 gelöst.

Vorteilhafte Ausgestaltungen sind den abhängigen Ansprüchen 2 bis 13 zu entnehmen.

Mehrere Ausführungsbeispiele der Erfinfung sind anhand der Figuren 1 bis 7 beschrieben. Es zeigen:
Fig. 1 ein erstes Ausführungsbeispiel eines optischen Schalters mit einem Mach-Zehnder-Inferferometer,
Fig. 2 ein zweites Ausführungsbeispiel eines optischen Schalters mit einem Mach-Zehnder-Interferometer, bei dem optische Schaltpulse direkt in einen Interferometerarm eingekoppelt werden,
Fig. 3 ein erstes Ausführungsbeispiel einer verwendeten Schaltpulsquelle,
Fig. 4 ein zweites Ausführungsbeispiel einer verwendeten Schaltpulsquelle,
Fig. 5 ein drittes Ausführungsbeispiel einer verwendeten Schaltpulsquelle,
Fig. 6 ein drittes Ausführungsbeispiel eines optischen Schalters mit einem Sagnac-Interferometer und
Fig. 7 ein viertes Ausführungsbeispiel eines optischen Schalters mit einem Sagnac-Interferometer, bei dem optische Schaltpulse direkt in die Faserspule eingekoppelt werden.

Die physikalische Grundlage, auf der die Funktionsfähigkeit der erfindungsgemäßen optischen Schalter beruht, ist der sogenannte Kerreffekt. Der Kerreffekt bewirkt in optischen Wellenleitern, daß eine optische Signalwelle durch das Einspeisen eines optischen Schaltpulses eine andere Brechzahl sieht. Der Kerreffekt wirkt sich maximal aus, wenn Signalwelle und Schaltpuls gleiche Polarisationszustände besitzen und zeigt nur einen geringen Wert, wenn die Polarisationsrichtung von Signalwelle und Schaltpuls orthogonal zueinander stehen. Auf diese Weise wird die optische Signalwelle in ihrer Ausbreitung beeinflußt.

Die hohe Schnelligkeit des Kerreffekts ermöglicht es, faseroptische Schalter aufzubauen, wie sie z.B. aus der Zeitschrift "Electronics Letters" vom 17. März 1988, Band 24, Nr. 6, Seiten 340 f und der Ausgabe vom 25. April 1991, Band 27, Nr. 9, Seiten 704 f bekannt sind, die in der Lage sind, Datenfolgen mit einer Bitfolgefrequenz mehrerer Gigabit pro Sekunde bitweise zu schalten.

Sowohl die bekannten als auch die erfindungsgemäßen optischen Schalter beruhen auf dem Interferometerprinzip. So weist ein erstes Ausführungsbeispiel eines erfindungsgemäßen optischen Schalters SCH als Interferometer INT ein Mach-Zehnder-Interferometer auf, das aus zwei optischen Kopplern (SK, IK) und zwei Glasfasern als Interferometerarme LWL1, LWL₂ besteht, einen Eingang Ei und zwei Ausgänge aufweist. Die Koppler SK, IK sind als sogenannte 2x2-Koppler aufgebaut, d.h. sie weisen jeweils zwei Eingänge und zwei Ausgänge auf.

Der erste Eingang des ersten Kopplers SK stellt den Signaleingang Eᵢ des optischen Schalters dar, der auf einen der beiden Ausgänge A, , A₂ durchschaltbar ist. Durch den zweiten Eingang des ersten Kopplers SK wird der optische Schaltpuls dem Interferometer INT zugeführt. Die Trägerwellenlänge der optischen Signalwelle und die des Schaltpulses unterscheiden sich in der Weise, daß der als wellenlängenabhängig ausgebildete erste Koppler SK die Signalwelle gleichermaßen in zwei Teilsignale auf die beiden Ausgänge des ersten Kopplers SK und somit auch auf die beiden Interferometerarme LWL1, LWL₂ verteilt, wohingegen der Schaltpuls überwiegend in einen Interferometerarm LWL₂ gekoppelt wird. Die beiden Interferometerarme LWL, und LWL₂ sind auf der dem ersten Koppler SK gegenüberliegenden Seite mit den beiden Eingängen des zweiten optischen Kopplers IK verbunden. Die beiden Teilsignale interferieren somit im zweiten Koppler IK positiv.

Der zweite Koppler IK ist für diesen Fall derart ausgelegt, daß das gesamte Interferenzsignal auf einen, hier z.B. den Ausgang A₁ des zweiten Kopplers, geführt wird. Erfahren die beiden Teilsignale in den Interferometerarmen eine unterschiedliche Behandlung, wenn z.B. im Interferometerarm LWL₂ ein Schaltpuls anliegt, so wird das im zweiten Koppler IK gebildete Interferenzsignal auf den zweiten Ausgang A₂ geführt. Bedingt durch den Kerreffekt sieht das Teilsignal in dem zweiten Interferometerarm LWL₂ eine höhere Brechzahl, was für dieses Teilsignal eine längere optische Weglänge zwischen den beiden Kopplern bedeutet und zu einer Phasenverschiebung der beiden Teilsignale und somit letztlich bei z.B. einer Phasenverschiebung um die halbe Wellenlänge zu einem Umschalten des Interferenzsignales vom Signalausgang A₁ auf den Signalausgang A₂ führt.

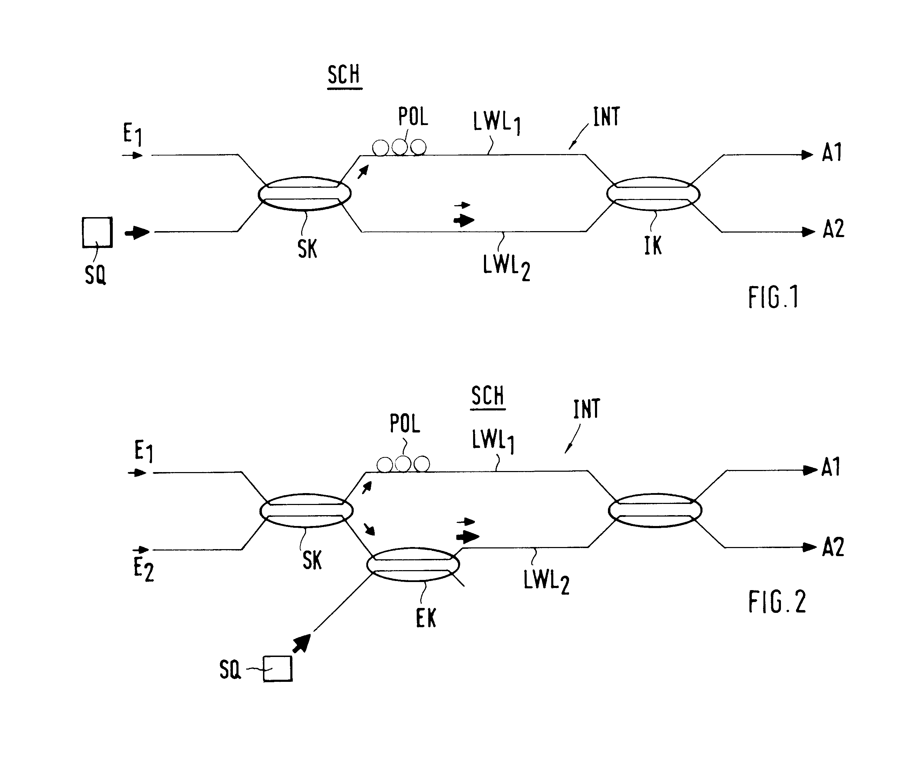

Zur deutlicheren Darstellung sind in der Fig. 1 und auch den folgenden Figuren die Signalwelle stets mit einem dünnen und der Schaltpuls stets mit einem dicken Pfeil eingezeichnet.

Ein solches Schalten der optischen Signalwelle findet unter realistischen Bedingungen nicht vollständig statt, genügt aber unter Berücksichtigung der Anforderungen, z.B. der in einem Add-Drop-Multiplexer. Eine ausreichende Interferenz der beiden Teilsignale im zweiten Koppler IK findet nur dann statt, wenn die Polarisation der beiden Teilsignale in hohem Maße übereinstimmt. Um diese zu gewährleisten, ist der erste Interferometerzarm LWL, mit einem als solchen bekannten Polarisationssteller POL ergänzt.

In dem zweiten Interferometerzarm LWL₂ ist zur technisch besseren Ausnützung des Kerreffekts eine Übereinstimmung der Polarisationsrichtung des Teilsignals und des Schaltpulses sinnvoll, was bei den bekannten optischen Schaltern zu der Anordnung eines zweiten Polarisationsstellers führte.

Ein Hauptbestandteil der Erfindung liegt nun in der Überwindung der Meinung der Fachwelt, nach der es erforderlich ist, stets gleichgerichtet polarisiertes Licht für das Teilsignal und den Schaltpuls zu verwenden.

Die erfindungsgemäße Lösung sieht einen Schaltpuls vor, der stets depolarisiert ist, wobei es nicht erforderlich ist, daß alle Polarisationszustände vorliegen. Der Schaltupuls kann auch über eine Schaltperiode hinweg viele gleichmäßig verteilte Polarisationszustände aufweisen. Ein solcher Schaltpuls wird im folgenden als quasi-depolarisiert bezeichnet.

Die Verwendung von quasi-depolarisiertem Licht als optischer Schaltpuls ermöglicht als besonderen Vorteil das Schalten von Signalen unabhängig von deren Polarisationsrichtung, ohne daß hierfür weitere Einrichtungen notwendig wären. Ein weiterer Vorteil liegt darin, daß selbst eine Änderung des Polarisationszustandes der zu schaltenden Signalwelle keinen Einfluß auf die Wirkung des erfindungsgemäßen Schalters hat.

Bekannte quasi-depolarisierte Schaltlichtquellen, wie z.B. mit Pulsen ansteuerbare optische Schaltpulsquellen, besitzen im allgemeinen jedoch nicht genügend Leistung in einem Polarisationszustand, um sinnvoll als Schaltpulsquelle in einer Einmodenfaser eingesetzt zu werden. Laserdioden mit genügend hoher Leistung sind wiederum stark polarisiert.

Als besonders vorteilhaft haben sich zur Erzeugung der für die Erfindung erforderlichen quasidepolarisierten Schaltpulse mit genügend hoher Leistung die in den nachfolgend beschriebenen Ausführungsbeispielen beschriebenen Schaltpulsquellen erwiesen.

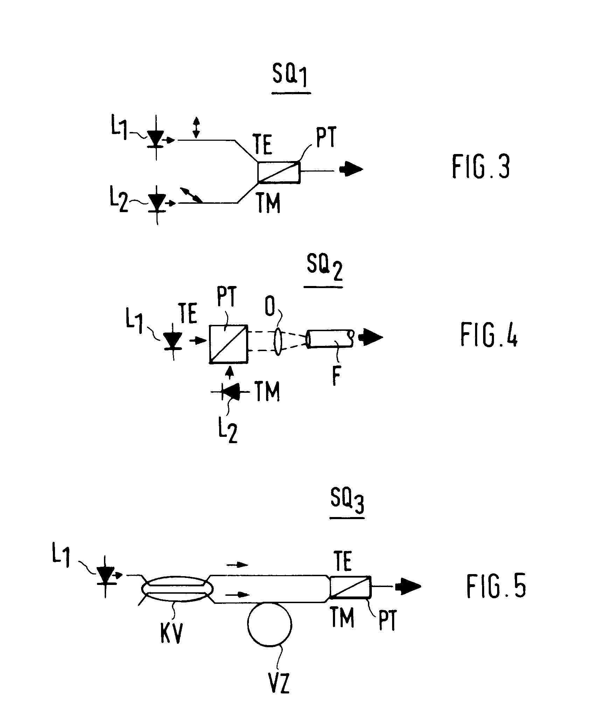

In den ersten beiden, in den Figuren 3 und 4 abgebildeten Ausführungsbeispielen von Schaltpulsquellen SQ₁, SQ₂ befinden sich zwei Lichtquellen Li, L₂, die Licht im gleichen Wellenlängenbereich mit etwa gleicher Amplitude emittieren und deren Polarisationsrichtungen orthogonal zueinander stehen. In einem nichtlinearen optisch dispersiven Element oszilliert der Polarisationszustand, so daß das erzeugte Licht wie depolariesiertes Licht wirkt. Das Erzeugen von depolarisiertem Licht unter Verwendung zweier Lichtquellen, die polarisiertes Licht emittieren, ist als solches aus der Zeitschrift OPTICS LETTERS, Vol. 16, No. 6, March 15, 1991, Seiten 381 bis 383 bekannt.

Beim ersten, in Fig. 3 abgebildeten Ausführungsbeispiel erzeugen die beiden Lichtquellen Li, L₂ zueinander praktisch inkohärente Lichtstrahlen großer Spektralbreite, die durch einen Polarisationskombinierer PT auf eine Faser konzentriert werden. Als Lichtquellen Li, L₂ werden z.B. longitudinal mehrpolige Laserdioden verwendet. Die Schaltpulsquelle SQ₁ kann, wie in der Fig. 3 abgebildet, aus faseroptischen Bauelementen aufgebaut sein. In diesem Fall sind an einem faseroptischen Polarisationskombinierer PT die Laserdioden über einen Faserteil angespleist.

Beim zweiten, in Fig. 4 abgebildeten Ausführungsbeispiel einer Schaltpulsquelle SQ₂ ist das von zwei Laserdioden L, , L₂ emittierte Licht durch einen Polarisationskombinator PT zu einem Strahl vereint. In den Strahlengang zwischen dem Polarisationskombinierer PT und einer Glasfaser F, in die das Licht eingekoppelt werden soll, ist eine Abbildungsoptik O zur Konzentration des Lichtes in die Glasfaser F angeordnet.

Werden bei den ersten beiden Ausführungsbeispielen von Schaltpulsquellen SQ₁, SQ₂ anstelle von spektral breiter Lichtquellen monochromatische Lichtquellen, wie Laser mit geringer Modenzahl (Festkörperlaser, insbesondere DFB- oder DBR-Laser, oder Gaslaser), eingesetzt, so ist das resultierende Licht nicht stets depolarisiert, sondern sein Polarisationszustand oszilliert mit sehr hoher Frequenz, z.B. mit f=130 GHz, bei Wellenlängen von 1531 nm und 1532 nm. Daher ist es zur Mittelung der daraus ebenfalls oszillierenden Phasenmodulation des Schaltpulses mit der Signalwelle erforderlich, mindestens etwa eine Schwebungswellenlänge der beiden Schaltpulswellenlängen aneinander vorbeizuführen. Es ergeben sich z.B. für den oben dargestellten Wellenlängenabstand von 1 nm eine Schwebungswellenlänge von 1,6 mm. Bei typischen Werten für den Wellenlängenabstand zwischen Signalwelle und Schaltpuls von 20 nm und einer Faserdispersion von 50 ps/km bewegen sich Signalwelle und Schaltpuls alle 200 m um die Schwebungswellenlänge von 1,6 mm aneinander vorbei. Je größer bei gegebenen Schaltparametern die Interferometerarme sind, desto eindeutiger sind die Schaltzustände definierbar, je kürzer die Interferometerarme sind, desto größer ist die größtmögliche Schaltzeit.

Bei einem dritten, in der Fig. 5 abgebildeten Ausführungsbeispiel einer Schaltpulsquelle SQ₃ wird das emittierte Licht aus nur einer Laserdiode L₁ gewonnen, in einem Faserkoppler KV in zwei gleiche Teile aufgeteilt. Einer der beiden Teile wird über eine Verzögerungsfaser VZ geleitet und beide Teile werden in einem Polarisationskombinierer PT wieder vereinigt. Die durch die Verzögerung bedingte zeitliche Verzögerung AT ist dabei so zu wählen, daß sie größer als die Kohärenzzeit des emittierten Lichtes ist.

Das dritte Ausführungsbeispiel einer Schaltpulsquelle SQ₃ eignet sich besonders, um Pulsfolgen zu erzeugen, da nur eine Laserdiode L₁ angesteuert werden muß. Um eine Pulsfolge mit der Periodendauer T zu erzeugen, ist es erforderlich, die Laserdiode L₁ gepulst zu betreiben und die Periodendauer mit der Verzögerungsstrecke VZ derart abzustimmen, daß die Laufzeit der Pulse durch die Verzögerungsstrecke VZ ein ganzzahliges Vielfaches der Periodendauer beträgt. Die Laserdiode kann dabei eine schmale spektrale Breite aufweisen, denn die zu unterschiedlichen Zeitpunkten emittierten Schaltpulse besitzen geringe Kohärenz zu anderen einzelnen und zu den zusammengefaßten Schaltpulsen und sind somit auf jeden Fall depolarisiert.

In der Fig. 2 ist ein zweites Ausführungsbeispiel eines optischen Schalters SCH mit einem Mach-Zehnder-Interferometer abgebildet, das sich vom ersten Ausführungsbeispiel in der Art der Einkopplung der Schaltpulse unterscheidet. Im zweiten Ausführungsbeispiel werden die Schaltpulse durch einen eigens dafür vorgesehenen dritten Koppler SK direkt in einen der Interferometerarme gekoppelt. Ansonsten sind die beiden Ausführungsbeispiele gleichartig aufgebaut. Im folgenden werden daher nur die für diesen Unterschied relevanten Aspekte beschrieben. Zur Einkopplung des Schaltpulses wird vorteilhafterweise ein Schmelzkoppler SK verwendet, der sehr kostengünstig ist und auch nur eine geringe Dämpfung aufweist. Andere Arten von optischen Kopplern sind ebenfalls verwendbar. Durch die getrennte Einkopplung der Signalwelle und des Schaltpulses werden an den ersten Koppler SR geringere Anforderungen gestellt, da lediglich die 1:1-Verteilung der Signalwelle auf die beiden Interferometerarme LWL1, LWL₂ berücksichtigt werden muß. Dies erlaubt auch die Verwendung von Signalwellen aus einem größeren Wellenlängenbereich.

Ein weiterer Vorteil des zweiten Ausführungsbeispieles liegt darin, daß ein zweiter Eingang E2 zum Schalten einer weiteren Signalwelle zur Verfügung steht. Beide Signalwellen können parallel oder kreuzweise zueiander geschaltet werden.

Ein Schaltpuls für die ersten beiden Ausführungsbeispiele von optischen Schaltern kann auch einen Dauerpsuls darstellen, so daß ein Schaltzustand über eine längere Periode bestehen bleibt.

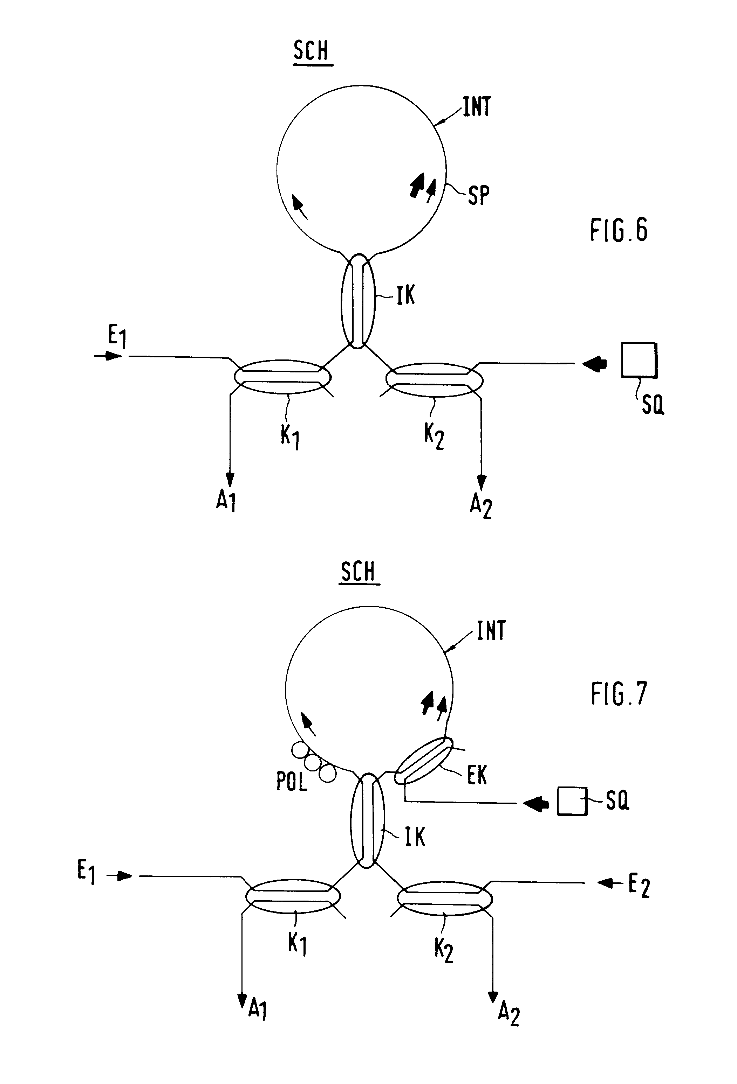

Ein drittes Ausführungsbeispiel eines optischen Schalters SCH ist in Fig. 6 abgebildet. Der optische Schalter SCH weist einen Eingang und zwei Ausgänge auf, die jeweils über optische 2x2-Koppler mit einem Interferometer INT verbunden sind. Das verwendete Interferometer ist zur Messung von Drehraten unter Ausnützung des Sagnac-Effekts bekannt und wird im folgenden daher als Sagnac-Interferometer bezeichnet. Das Sagnac-Interferometer besteht aus einem optischen 2x2-Koppler IK, dessen beide Ausgänge mit einer Faserspule SP verbunden sind. Der Koppler IK ist derart ausgebildet ist, daß eine zu schaltende Signalwelle, die über einen Eingang des Kopplers IK zugeführt wird, sich in beiden Richtungen der Faserspule SP gleichermaßen ausbreitet. Im Gegensatz zu Mach-Zehnder-Interferometer weist das Sagnac-Interferometer keine getrennten Interferometerarme auf. Durch das symmetrische Einkoppeln der Signalwelle in beide Richtungen der Faserspule SP wird aber der gleiche Effekt wie im Mach-Zehnder-Interferometer erreicht. Der optische Schalter SCH ist wie in Fig. 6 abgebildet so aufgebaut, daß die beiden Eingänge des Interferometerkopplers IK jeweils mit einem Anschluß des ersten Kopplers K₁ und des zweiten Kopplers K₂ verbunden sind, die wiederum mit dem Eingang Ei und den Ausgängen A1, A₂ des optischen Schalters SCH verbunden sind.

Für die Signalwelle sind die Koppler Ki, K₂, günstigerweise, für den Interferometerkoppler IK idealerweise als 1:1-Koppler ausgebildet. Dies bedeutet für eine Signalwelle, die durch den Eingang Ei eintritt, daß günstigerweise 50% der Leistung über den ersten Koppler K₁ dem Interferometerkoppler IK zugeführt werden, dort in zwei gleiche Signalteile getrennt werden, die nun in entgegengesetzter Richtung die Faserspule SP durchlaufen. Liegt nun kein Schaltimpuls an, wird aufgrund des symmetrischen Aufbaus des Interferometers das aus den beiden Teilsignalen gebildete Interferenzsignal in den ersten Koppler K₁ zurückreflektiert und dem Ausgang A₁ zugeführt.

Der optische Schaltpuls wird im Ausführungsbeispiel in einen Schaltpulsquelle SQ erzeugt und über den zweiten Koppler K₂ dem Sagnac-Interferometer zugeführt. Die Koppler K₂ und IK sind wellenlängenabhängig aufgebaut und derart dimensioniert, daß der Schaltpuls überwiegend in den Interferometerkoppler IK und in diesem nur in einen Ausgang gekoppelt wird. Dies führt im Ausführungsbeispiel zur Ausbreitung des Schaltpulses in nur einer Richtung. Der Schaltpuls wird nach Durchlaufen der Faserspule FS über den Interferometerkoppler IK und dem ersten Koppler K₁ ausgefiltert.

Wie auch aus der Fig. 6 ersichtlich, breitet sich in der Faserspule SP ein Schaltpuls (dicker Pfeil) und nur ein Teilsignal (dünner Pfeil) in der gleichen Richtung, entgegen dem Uhrzeigersinn aus. Ein Teil der Signalwelle, das Teilsignal, das sich über die gesamte Faserspule gemeinsam mit dem Schaltpuls ausbreitet, sieht aufgrund des Kerreffekts eine Änderung der optischen Weglänge und somit auch eine relative Phasenänderung durch die Interferenz der beiden Teilsignale im Interferenzkoppler IK wird ein Umschalten dieses Interferenzsignales auf den zweiten Koppler K₂ und somit auf den Ausgang A₂ bewirkt.

Ähnlich wie beim zweiten Ausführungsbeispiel, wird bei einem vierten, in Fig. 7 abgebildeten Ausführungsbeispiel der Schaltpuls dem Interferometer INT unabhängig von der Einkopplung der Signalwelle zugeführt. Hierzu wird die Schaltpulsquelle SQ durch einen Koppler EK, der vorzugsweise als Faserkoppler ausgebildet ist, direkt mit der Faserspule FS verbunden. Hierdurch werden die gleichen, schon zum zweiten Ausführungsbeispiel beschriebenen Vorteile erzielt.

Die Länge der Interferometerarme oder der Faserspule SP hängt u.a. vor allem vom Leistungspegel des Schaltpulses ab. Bei einer Pulsleistung von P = 80 mW in der Faserspule FP oder in den Interferometerarmen LWL" LWL₂ weisen diese günstigerweise eine Länge im Bereich von 10 bis 15 km auf. Es können dabei handelsübliche dispersionsverschobene optische Fasern verwendet werden.

Neben den beschriebenen Elementen können an den Ein- und Ausgängen sowie an den Zuleitungsfasern für die Schaltpulse optische Vestärker (nicht abgebildet), soweit Signalwelle und/oder Schaltpuls in ihr Verstärkungsband fallen, eingesetzt werden. Durch den optischen Verstärker können die Schaltimpulsleistung erhöht oder Signalverluste ausgeglichen werden. An den Ausgängen können optische Filter angeordnet werden, die die Schaltpulse gegenüber der Signalwelle unterdrükken.

Im dritten Ausführungsbeispiel des optischen Schalters SCH wird ein optischer Verstärker günstigerweise zwischen dem ersten Koppler K₁ und dem Interferenzkoppler IK, im vierten Ausführungsbeispiel zusätzlich noch zwischen dem zweiten Koppler K₂ und dem Interferenzkoppler IK angeordnet. Eine derartige Anordnung führt zu einer zweimaligen Verstärkung der Signalwelle durch nur einen optischen Verstärker.

Es können auch polarisationserhaltende Fasern als Interferometerarme oder als Faserspule SP angeordnet werden, um definierte Schaltzustände zu erreichen, was besonders dann von Vorteil ist, wenn Signalwellen durchgeschaltet werden sollen, die von unterschiedlichen Signalquellen stammen und somit gegebenenfalls unterschiedliche Polarisationsrichtungen aufweisen. Bei der Verwendung von polarisationserhaltenden Fasern gegenüber der Verwendung von Polarisationsstellern in Verbindung mit nicht polarisationserhaltenden Fasern ist keine Regeleinrichtung zum Nachregeln der Polarisationsrichtung zur Einstellung der Schaltzustände erforderlich.

Die in den Ausführungsbeispielen beschriebenen Schalter weisen jeweils zwei Signalausgänge auf.

Die Erfindung ist auch für einfache Ein-AusSchalter verwendbar. Der Aufbau kann sich dabei entsprechend vereinfachen. Im dritten Ausführungsbeispiel eines optischen Schalters könnte z.B. der erste Koppler K₁ entfallen.

## Patentansprüche

1. Optischer Schalter (SCH) mit wenigstens einem Signaleingang (Ei, E2) und wengistens einem Signalausgang (A₁, A₂),
- bei dem zwischen dem Signaleingang oder den Signaleingängen und dem Signalausgang oder den Signalausgängen ein Interferometer (INT) angeordnet ist,
- bei dem eine vorzugsweise in eine Richtung polarisierte optische Signalwelle im Interferometer in zwei optische Teilsignale aufgeteilt wird, die optischen Teilsignale sich im Interferometer (INT) unterschiedlich ausbreiten, in einem optischen Koppler (lK) wieder zusammengeführt werden und sich dabei an einem Ausgang des optischen Kopplers (lK) ein von der relativen Phasenlage der optischen Teilsignale abhängiges Ausgangssignal ergibt,
- bei dem nur eines der beiden optischen Teilsignale oder eines der beiden optischen Teilsignale bevorzugt durch einen optischen Schaltpuls eine längere optische Weglänge erfährt,
dadurch gekennzeichnet,
daß der optische Schaltpuls depolarisiert ist oder über eine Schaltperiode hinweg viele verteilte Polarisationszustände aufweist.

2. Optischer Schalter nach Anspruch 1, dadurch gekennzeichnet, daß der optische Schaltpuls über eine Schaltperiode hinweg viele verteilte Polarisationszustände aufweist und aus zwei Lichtstrahlen etwa gleicher Intensität, etwa gleicher Wellenlänge und geringer Kohärenzlänge zusammengesetzt ist, die Lichtstrahlen linear polarisiert sind und die Polarisationsrichtung der Lichtstrahlen orthogonal zueinander ausgerichtet ist und sich der Schaltpuls wenigstens teilweise gemeinsam mit einem optischen Teilsignal in einem Wellenleiter (LWL₁, SP) des Interferometers (INT) mit nichtlinearem optischem Brechungsindex ausbreitet.

3. Optischer Schalter nach Anspruch 2, dadurch gekennzeichnet, daß die Schaltpulsquelle (SQ₁, SQ₂, SQa) zur Erzeugung des optischen Pulses zwei Lichtquellen (L₁, L₂) aufweist.

4. Optischer Schalter nach Anspruch 3, dadurch gekennzeichnet, daß die Schaltpulsquellen (SQ₁, SQ₂, SQa) spektral schmalbandiges Licht aussenden, deren Mittenwellenlängen sich unterscheiden.

5. Optischer Schalter nach Anspruch 2, dadurch gekennzeichnet, daß die Schaltpulsquelle (SQ₁, SQ₂, SQ₃) zur Erzeugung des optischen Schaltpulses eine Lichtquelle (L₁) aufweist, deren Ausgangssignal in einem Verzweiger (KV) geteilt, ein Teil verzögert und beide Teile in einem polarisationsempfindlichen Kombinierer (PT) wieder zusammengeführt werden.

6. Optischer Schalter nach Anspruch 2, dadurch gekennzeichnet, daß durch die Überlagerung der beiden Lichtstrahlen eine Schwebung entsteht und die Länge des Wellenleiters (LWL1, SP) mit dem nichtlinearen optischen Brechungsindex größer als die oder etwa gleich der Schwebungswellenlänge ist.

7. Optischer Schalter nach Anspruch 1, dadurch gekennzeichnet, daß der optische Schaltpuls depolarisiert ist und die Schaltpulsquelle (SQ) ein Gaslaser ist.

8. Optischer Schalter nach Anspruch 1, dadurch gekennzeichnet, daß das Interferometer (INT) als Mach-Zehnder-Interferometer mit zwei Interferometerarmen (LWL1, LWL₂) ausgebildet ist, sich die optische Signalwelle in beiden Interferometerarmen (LWL1, LWL₂) in gleicher Richtung ausbreitet und sich der Schaltpuls überwiegend nur in einem Interferometerarme ausbreitet.

9. Optischer Schalter nach Anspruch 1, dadurch gekennzeichnet, daß wenigstens für ein Teilsignal Mittel (POL) zur Einstellung des Polarisationszustandes der Signalwelle vorhanden sind.

10. Optischer Schalter nach Anspruch 1, dadurch gekennzeichnet, daß die nichtlineare optische Faser (LWL₁, LWL₂, SP) eine polarisationserhaltende Faser ist.

11. Optischer Schalter nach Anspruch 1, dadurch gekennzeichnet, daß das Interferometer (INT) als ein Sagnac-Interferometer ausgebildet ist und eine Faserspule (SP) aufweist, in der sich die beiden Teilsignale in entgegengesetzter Richtung ausbreiten und sich der Schaltpuls überwiegend nur in einer Richtung ausbreitet.

12. Optischer Schalter nach Anspruch 1, dadurch gekennzeichnet, daß der optische Schaltpuls getrennt von der Signalwelle in das Interferometer (INT) eingekoppelt wird.

13. Optischer Schalter nach Anspruch 12, dadurch gekennzeichnet, daß der optische Schaltpuls durch einen Schmelzkoppler (EK) eingekoppelt wird.
